# EUROPEAN PATENT SPECIFICATION

(11) **EP 1 518 663 B1**
(45) Date of publication and mention of the grant of the patent: **08.02.2006**
(21) Application number: 03380208.3
(22) Date of filing: 23.09.2003
(51) Int. Cl.: B29C 63/04, B60R 13/02

(54) **Process and facility for manufacturing an edged layered product**
Verfahren und Anlage zum Herstellen von eines scharfkantigen Mehrschichtprodukts
Méthode et installation pour la production d'un panneau laminé à arête vive

(43) Date of publication of application: 30.03.2005
(73) Proprietor: Grupo Antolin Ingenieria, S.A., 09007 Burgos (ES)
(72) Inventor: Ariznavarreta Esteban, Anselmo, 09190 Villatoro Burgos (ES); Merino Rojo, Francisco Javier, 09001 Burgos (ES)
(74) Representative: Esteban Perez-Serrano, Maria Isabel

(56) References cited:
- EP-A- 0 237 838
- EP-A- 0 286 961
- EP-A- 0 545 390
- EP-A- 1 344 629
- US-A- 4 986 865
- PATENT ABSTRACTS OF JAPAN vol. 005, no. 057 (M-064), 18 April 1981 (1981-04-18) & JP 56 011226 A (MATSUSHITA ELECTRIC WORKS LTD), 4 February 1981 (1981-02-04)

## Description

### FIELD OF THE INVENTION

The invention is related to obtaining edged layered products which have one lined face, such as interior iinings for automobiles.

### BACKGROUND OF THE INVENTION

Many processes are currently known for obtaining lined layered products constituted of:
- a layered substrate (composed of several layers which together form the substrate); and of
- a lining applied on the face of the substrate, a lining which also covers edges of said substrate.

The substrate can be obtained in a mold or press, by means of the application of heat and pressure on a set of layers or laminas, such that said layers adhere together and adopt a shape predetermined by the contact surfaces of the press. In the same press or in a subsequent phase, the substrate is trimmed, for example, to obtain the desired contour of the product and/or to make holes in the product. In a subsequent phase, a lining layer is applied on a surface or face (the one which corresponds to the part which the user sees) of the substrate and on the trimmed edges of the substrate. The main reason the lining must be applied in a phase subsequent to the substrate formation phase is that the lining must also cover the trimmed edges.

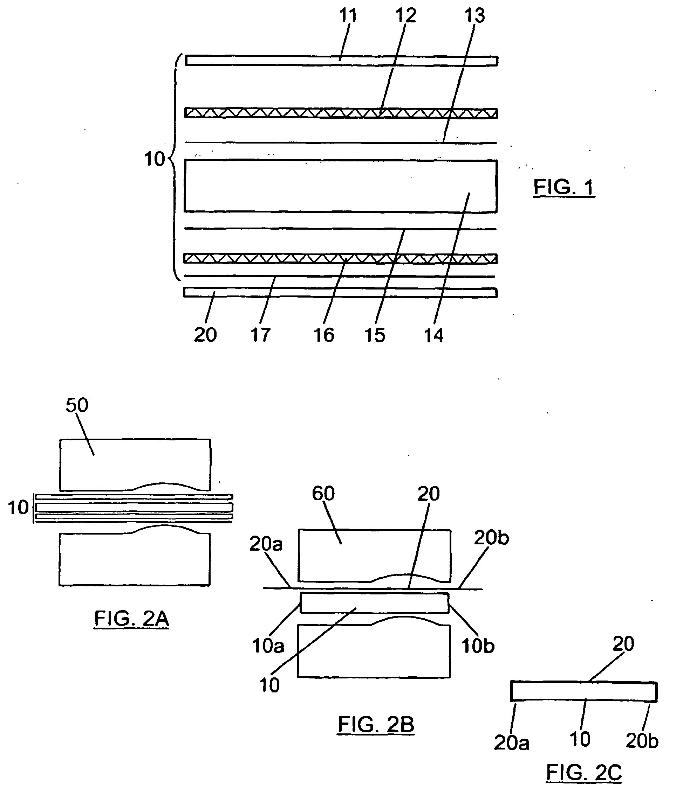

An example of a process of this type is the process for obtaining a ceiling trim board for automotive vehicles. Figure 1 schematically shows the different layers constituting the trim board. First, there is a substrate 10 formed by the following layers:
- a non-woven lining 11, for example paper, of the non-visible face of the product;
- a first reinforcement layer 12;
- a first thermosetting resin layer 13 serving to bind the first reinforcement layer to a central layer 14;
- the central layer 14 which can be constituted of a polyurethane foam; said layer can have a semi-rigid consistency;
- a second thermosetting resin layer 15 intended for binding the central layer 14 to a second reinforcement layer 16;
- the second reinforcement layer 16; and
- a light non-woven material layer 17 (which serves to prevent the substrate from sticking to the mold in the substrate pressing phase).

Secondly, bound to the light non-woven material layer 17, there is a lining 20 of the surface or face of the product (i.e. it is the lining which the final user sees) and which is normally bound to the substrate 10 by means of an adhesive (not shown in the figure). Many times, said lining must cover not only the main face of the substrate, but also different borders or edges of the substrate, made by means of a process for trimming the substrate.

Currently, according to a conventional method, obtaining ceiling trim boards with edging of the lining (i.e. with the application of the lining on the edges of the substrate) is carried out in at least two separate pressing phases by means of the use of two presses: one press for obtaining the substrate and another press for applying the lining.

In the first phase, which corresponds to obtaining the substrate, different laminas or layers which will constitute the substrate are introduced in a press, one on top of the other. Then, pressure and heat are applied in order to, on one hand, bind the layers (by means of the polymerization of the thermosetting resins 13, 15) and, on the other hand, to give the desired shape (curves, etc.) to the substrate. The substrate is also trimmed, i.e. parts of the material are removed for the purpose of forming the desired profile of the substrate, through holes (for example, a hole corresponding to the sun roof window of the vehicle), etc. This trimming of the substrate can be carried out in the press as an integral part of the phase for obtaining the substrate, or separately, in a later trimming phase carried out in another machine. As a result of the trimming and of the corresponding removal of part of the laminar material, trimmed edges are formed, at least some of which must be lined with the same lining as the main face of the substrate.

In the second phase, an adhesive (normally, a pressure-activated adhesive) is applied on the light non-woven material layer of the substrate obtained as a result of the process disclosed above. The substrate is placed in a second press, together with the face lining, and by means of the application of pressure, the substrate is lined; the lining adheres to the substrate by means of the applied adhesive.

The dimensions of the face lining are somewhat larger (in the areas which will be edged) than those of the substrate, such that the edging can be carried out in a subsequent operation by folding the excess parts of the face lining, wrapping around the substrate.

This process is schematically shown in figures 2A-2C.

Figure 2A shows how a plurality of layers which will constitute a substrate 10 are introduced in a first press 50. The substrate is formed by means of the application of pressure and heat. Furthermore, in the first press 50, peripheral parts of the substrate are also removed, such that edges are formed which can be seen in figure 2B. Said figure 28 shows how the substrate 10 obtained in the first press 50 and with its trimmed edges 10a and 10b has been introduced in a second press 60, together with a lamina of lining 20 whose ends 20a and 20b project from the upper surface of the substrate. An adhesive (not shown) has been previously applied on the surface of the substrate 10 to which the lining 20 is to be adhered. In the second press, the lining 10 adheres to the upper surface of the substrate by applying pressure (and, where applicable, heat), the ends 20a and 20b of the lining being free. There is also a possibility of trimming the lining in the second press, for example, so that its ends or contour have the desired shape and/or to remove the material corresponding to, for example, a sun roof window (in which case the trimmed part of the lining must be smaller than the surface of the window, for the purpose of allowing the edging of the visible edges of the substrate defining the window).

Then, in a subsequent step, adhesive is applied on the edges 10a, 10b of the substrate (and/or on the free ends of the lining) and said edges are covered with the excess free ends 20a, 20b of the lining. Figure 2C schematically shows how the lining 20 covers the face of the substrate 10 and how the free ends 20a, 20b of the lining cover the trimmed edges of the substrate.

In theory, the disclosed process requires the use of two different presses:
i) a first press for obtaining the substrate by means of the application of pressure and heat to a set of layers constituting the substrate; optionally, the trimming of the substrate can also be carried out in this first press for the purpose of defining the contour of the substrate and eventual holes (for example, for a sun roof window) can be carried out, with the edges which must subsequently be lined; alternatively, the substrate can be trimmed in a subsequent phase; and
ii) a second press in which the lining is applied on the substrate; optionally, in this second press, eventual trimmings can be carried out on the lining layer (for example, to form the hole corresponding to a sun roof window).

It is necessary to use two presses with this process since, if the lining is bound to the substrate in the first press, in the same process in which pressure and heat are applied in order to bind the different layers constituting the substrate, then when "trimming" the substrate, the lining layer is also trimmed, therefore there are no excess free ends of the lining which can serve to cover the edges formed upon trimming the substrate, i.e. there is no excess part of the lining which can be used to line said edges.

Therefore, in the conventional process disclosed, it is necessary to use a first press to shape the substrate, which is then trimmed, to then go to a second press in which the lining is applied.

To reduce costs, it would be desirable to carry out the entire process in a single press.

On the other hand, the conventional process, based on the use of two presses, implies a large number of operations and normally requires several operators, for example: one operator to apply adhesive to certain areas such as the deep drawings where the grips, visors, etc. are arranged, elements which require a large amount of adhesive so that the lining completely adheres; another operator for applying adhesive to the entire surface of the substrate which must be lined; another operator for introducing the lining into the second press; another operator for positioning the substrate in the second press; and another operator for removing the shaped trim board from the second press.

US-A-4,986,865 discloses a well known system according to that disclosed above.

EP-A-1344629 discloses a method for producing a board (such as an MDF board) having a lining which covers the thin sides or edges of the board, by cutting or trimming the board itself and then folding remaining portions of the lining over the trimmed edges.

EP-A-0237838 discloses a film peeling apparatus having a fluid injection device for applying jet of fluid to the area where the film is attached to the substrate, thereby facilitating the peeling. The apparatus is intended for use in the production of printed circuit boards.

### DESCRIPTION OF THE INVENTION

It has therefore been considered that it would be desirable to develop a process which allows reducing the number of presses and which allows applying the lining to the substrate in the same pressing phase in which the substrate is formed, allowing, however, a subsequent substrate trimming phase to be carried out without removing all the corresponding parts of the lining and, preferably, without the process negatively affecting the appearance of the lining.

A first aspect of the invention refers to a process for manufacturing a layered product comprising a substrate, constituted of at least one layer, and a lining which covers a visible surface of the substrate and at least one edge of the substrate. The process comprises the following steps:
a) at least one layer intended for constituting a substrate and, at least, one lining layer intended for being the lining of the visible surface of the product are introduced in a press;
b) pressure and heat are applied on the layers in the press for the purpose of obtaining an assembly of layers bound together and with a predetermined shape defined by the press;
c) a fluid (for example, a hot fluid, such as steam) is applied on at least one predetermined area of the assembly of layers, for the purpose of ungluing at least the lining layer from the substrate in said at least one predetermined area (this can be done by transferring the fluid, for example, steam, from a deposit or generator of the fluid towards fluid outlets located in the areas where the lining layer is to be separated from the substrate);
d) a part of the lining layer is separated from the substrate in said at least one predetermined area (it may be convenient or necessary to separate, together with the lining layer, an additional layer used between the lining layer and the substrate itself, to facilitate the separation of the lining layer from the substrate);
e) the substrate is trimmed (for example, by means of ultrasound-trimming, which allows carrying out trimmings in a very precise manner), such that at least one part of the substrate is removed, such that at least one trimmed edge is obtained in said at least one predetermined area;
f) said at least one trimmed edge is covered with the lining layer (for example, adhesive is applied on the separated part of the lining layer and said part with the adhesive is folded over the edge or edges, such that the edges are covered).

The application of fluid, preferably hot fluid, such as steam, serves to make it easy to unglue or separate the layer constituting the lining from the rest of the assembly of layers, i.e. from the substrate itself. The separation can be achieved without leaving marks since no violent force has to be exerted on the lining, nor do special separation plates have to be placed in the areas where the lining is to be unglued from the substrate. Once the substrate is trimmed, adhesive is applied on the unglued parts of the lining and/or on the trimmed edges to be lined, and the lining is folded over said edges, obtaining the desired lining of said edges.

Thus it is achieved that the product, including substrate and face lining bound to the substrate, can be obtained in a single press, in a single shaping step. This means that the number of necessary presses is reduced, as well as the number of working moments. For example, it is no longer necessary to apply an adhesive layer to bind the lining layer to the substrate in a separate step subsequent to obtaining the substrate. All the steps can be carried out by a single operator and with a single press. This also implies a reduction of the factory floor space which must be dedicated to the process.

Reductions of the amounts of material used can also be achieved. For example, the invention allows reducing the amount of adhesive necessary for binding the lining layer to the substrate, since the lining layer is bound to the substrate in the substrate forming phase, therefore only the adhesive necessary for adhering the excess parts of the lining layer on the edges must subsequently be applied. Furthermore, the process of the invention allows removing the light non-fabric material layer which, in the known system, served to prevent the substrate from sticking to the mold, since in the process according to the invention, the lining layer can serve for this purpose.

The step of separating one part of the lining layer from the substrate can comprise the step of letting said part of the lining layer fall downwards due to gravity (this solution is viable if the lining layer is located under the substrate) or the step of shifting said part of the lining layer with a shifting element, in which case said shifting element can comprise at least a gripper formed so as to lift said part of the lining layer.

In step (a), the lining layer can be placed on an intermediate layer chosen to facilitate the separation of the (part of the) lining layer from the substrate in step (d).

Said intermediate layer can form part of the substrate and not be separated from the substrate in step (d). As an alternative, the intermediate layer can be separated from the substrate in step (d), together with the corresponding part of the lining layer. In both cases, said intermediate layer can be, for example, a thermoplastic film, such as polyamide, polyethylene, polypropylene film, etc.

In the case of using foamed fabrics as the decorative face lining, it may be convenient to use an intermediate layer which forms a barrier between the substrate and the lining and which prevents the adhesive (normally, there is an adhesive layer between the reinforcement layer closest to the lining, and which impregnates this reinforcement layer as well as the separating layer which facilitates the ungluing) from migrating to the lining layer of the face, for the purpose of preventing the occurrence of the corresponding marks on the face. This intermediate layer can also serve to allow the easy ungluing of the lining by means of the application of fluid (for example, steam). In the case of using non-foamed fabrics as a decorative lining, there are normally no problems of marks caused by the migration of the adhesive towards the face, however it is always convenient to have said intermediate layer to achieve easily ungluing of the lining. The choice of a suitable material for the intermediate layer can be made taking into account whether it is necessary or not for said layer to also serve for preventing adhesive stains on the face.

The layered product can be a part for an automobile, for example a trim board for the interior of an automobile (for example for the ceiling of an automobile, or a rear tray for the automobile, generally for trims of the interior of the automobile).

Another aspect of the invention refers to a facility for carrying out the process according to any of the previous claims. The facility comprises:
- means for receiving a plurality of layers, including at least one layer intended for constituting a substrate and a lining layer;
- means for subjecting said layers to pressure and heat such that an assembly of layers bound together is obtained with a defined, predetermined shape;
- means for applying a fluid on at least one predetermined area of the assembly of layers, for the purpose of ungluing at least the lining layer from the substrate in said at least one predetermined area;
- means for separating a part of the lining layer from the substrate in said at least one predetermined area (for example, grippers or a space allowing the lining layer to fold downwards due to gravity); and
- means for trimming the substrate such that one part of the obtained substrate is removed, such that at least one trimmed edge in said at least one predetermined area is obtained (for example by means of an ultrasound-robot).

The means for applying a fluid on at least one predetermined area of the assembly of layers can comprise fluid conduits communicating a fluid source with said at least one predetermined area of the assembly of layers. The fluid source can be a steam generator.

The means for separating one part of the lining layer from the substrate can consist of gravity itself, such that once the corresponding part of the lining layer has been unglued, said part falls due to its own weight. Alternatively, the means for separating one part of the lining layer from the substrate can consist of a shifting element, for example, in at least one gripper formed so as to lift said part of the lining layer.

The means for trimming the substrate can consist of an ultrasound apparatus.

The means for subjecting the layers to pressure and heat can be located in the same work station as the means for applying a fluid; however, in an alternative embodiment, the means for subjecting the layers to pressure and heat and the means for applying a fluid can be located in different work stations within the facility.

This facility allows carrying out the shaping of the substrate and the application of the lining in a single working operation.

### BRIEF DESCRIPTION OF THE DRAWINGS

A series of drawings are briefly described below which aid in better understanding the invention and which are expressly related to embodiments of said invention, which drawings are presented as illustrative and non-limiting examples of the latter.
Figure 1 schematically shows the different layers forming part of a ceiling trim board for automotive vehicles (in the state of the art as well as according to a possible embodiment of the invention).
Figures 2A-2C schematically show some steps of the production process of a layered product lined according to the state of the art.
Figures 3A-3F schematically show the process according to a preferred embodiment of the invention.
Figures 4A and 4B schematically show the layered product in an elaboration phase corresponding to figure 3D, but including an intermediate layer.
Figure 5 shows an equipment for the ungluing by steam according to a preferred embodiment of the invention.
Figure 6 shows a detail of the base plate of the equipment for ungluing by steam, with accessories.
Figure 7 shows a side cross-section view of the equipment in a phase of the process.
Figure 8 shows a schematic perspective view of a machine for use in a facility according to a preferred embodiment of the invention, which incorporates an equipment for the ungluing by means of the application of steam, including trimming accessories.
Figure 9 schematically shows a machine for use in a facility according to another preferred embodiment of the invention.
Figure 10 schematically shows the areas trimmed in two ceiling trim board trimming phases for a vehicle with a sun roof window.

### DESCRIPTION OF PREFERRED EMBODIMENTS OF THE INVENTION

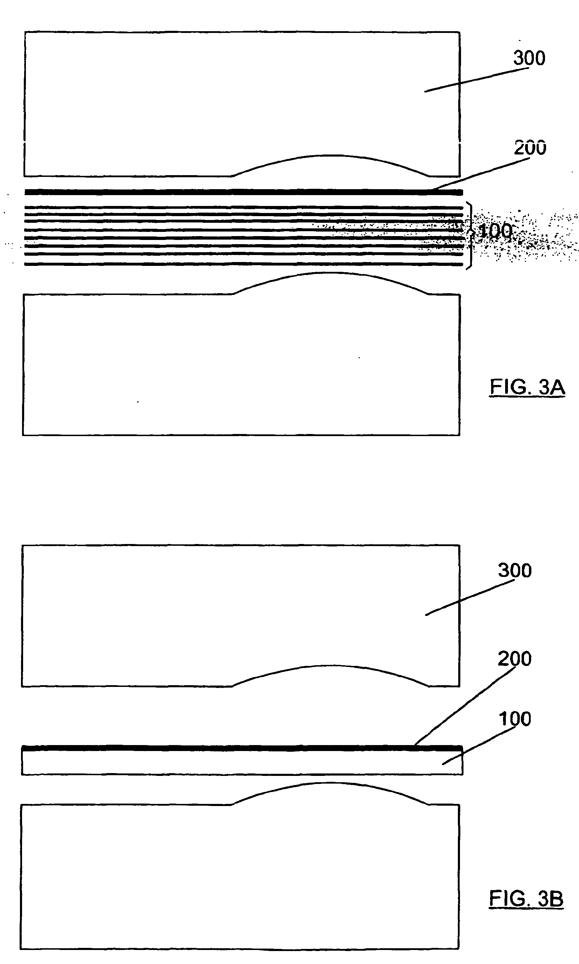

Figure 3A schematically shows a first step of the manufacturing process according to a preferred embodiment of the invention. In a first step, at least one layer intended for constituting a substrate 100 and at least one lining layer 200 intended for being the lining of the face of the product are introduced in a press 300.

Then, pressure and heat are applied on the layers in the press for the purpose of obtaining an assembly of layers bound together and having a predetermined shape defined by the press; the obtained product is schematically shown in figure 3B.

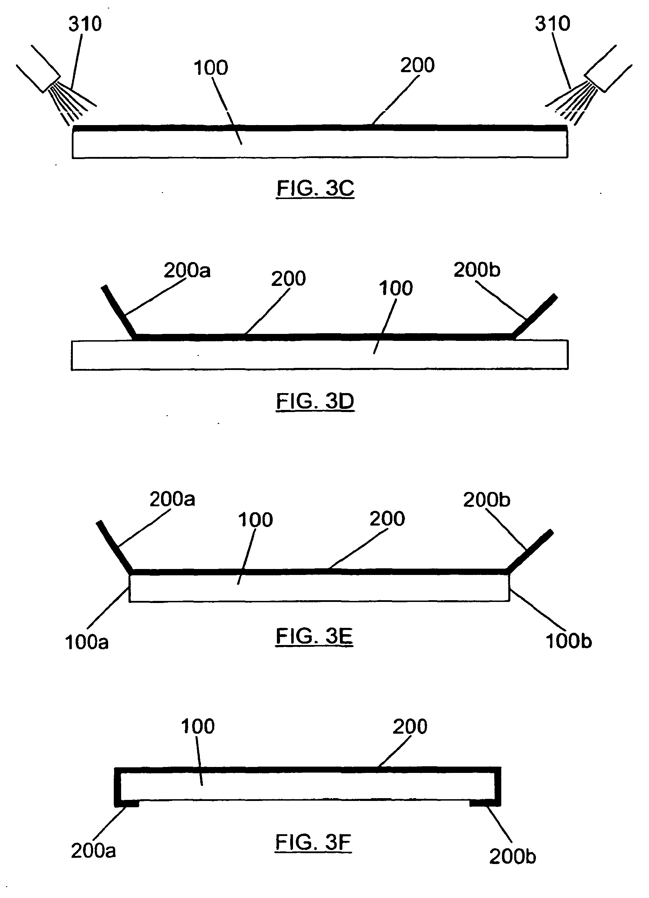

Subsequently, a fluid, such as steam 310 (see figure 3C), is applied on predetermined areas of the assembly of layers for the purpose of ungluing at least the lining layer 200 from the substrate 100 in said predetermined areas. Here there are two main alternatives: according to a first alternative, the fluid can be applied in an equipment or work station which is independent from the press 300. However it is also possible to apply the fluid in the same press in which heat and pressure are applied to obtain the assembly.

In a subsequent step, parts 200a and 200b of the lining layer 200 are separated from the substrate 100 in said predetermined areas, as shown in figure 3D.

In a subsequent step, the substrate is trimmed with trimming tools (not shown; for example, ultrasound trimming tools can be used), such that parts of the substrate 100 are removed, such that the corresponding trimmed edges 100a, 100b are obtained in the predetermined areas in which the lining layer 200 has previously been removed from the substrate; the result of this step is schematically shown in figure 3E.

Finally, adhesive is applied on the edges 100a, 100b to be lined and/or on the separated parts 200a, 200b of the lining layer 200, and the edges are lined, folding the separated parts 200a, 200b of the lining layer over said edges, obtaining a product with lined edges as is schematically shown in figure 3F.

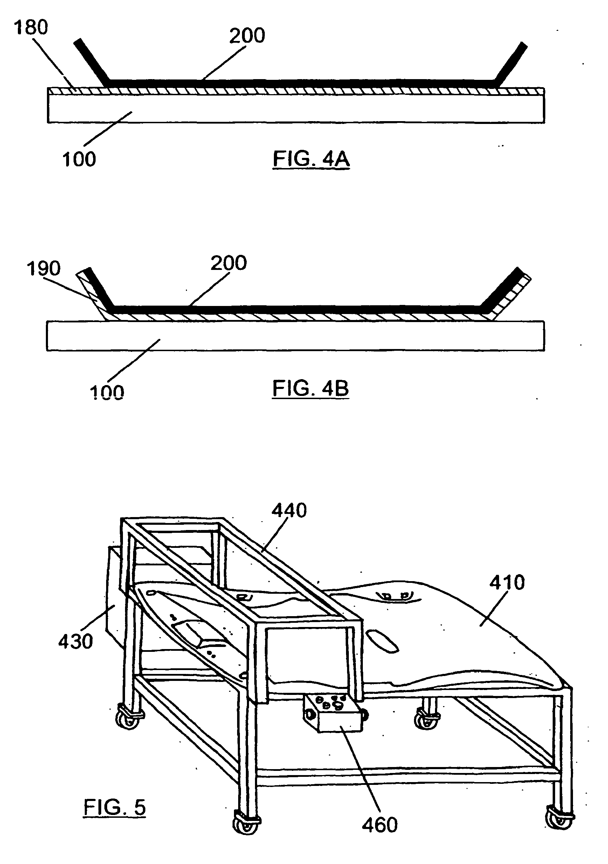

Figure 4A schematically shows the layered product in an elaboration phase corresponding to figure 3D, the product, under the lining layer 200, including an intermediate layer 180 (for example, a thermoplastic film) chosen so as to facilitate the separation of the lining layer 200 from the substrate 100 in step (d). In this case, an intermediate layer 180 has been chosen which forms part of the substrate and which is not separated from the substrate in step (d), i.e. only the lining layer 200 is separated. Therefore, the intermediate layer 180 has been chosen such that the binding between it and the lining layer allows easily separating the lining layer 200 from the intermediate layer once steam has been applied to the area in question. Logically, the features of the lining layer 200 as well as those of the layer of the substrate 100 to which the intermediate layer 180 is bound influence the selection of the material for the intermediate layer 180.

Figure 4B schematically shows an alternative embodiment to figure 4A: specifically, in the embodiment in figure 4B, under the lining layer 200 there is an intermediate layer 190 (for example, a thermoplastic film) chosen so as to facilitate the separation of the part of the lining layer 200 from the substrate 100 in step (d). In this case, an intermediate layer 190 has been chosen which is separated from the substrate in step (d), together with the lining layer 200. Therefore, the intermediate layer 190 has been chosen such that the binding thereof to the substrate 100 allows easily separating the intermediate layer (and, therefore, the lining layer) from the substrate once steam has been applied to the area in question. Logically, the features of the lining layer 200 as well as those of the layer of the substrate 100 to which the intermediate layer is bound influence the selection of the material for the intermediate layer 190.

As mentioned above, the application of steam (or of another suitable fluid) can be done in the same press in which the assembly integrated by the substrate 100 and lining 200 is formed, but it is also possible to apply the steam in a separate equipment.

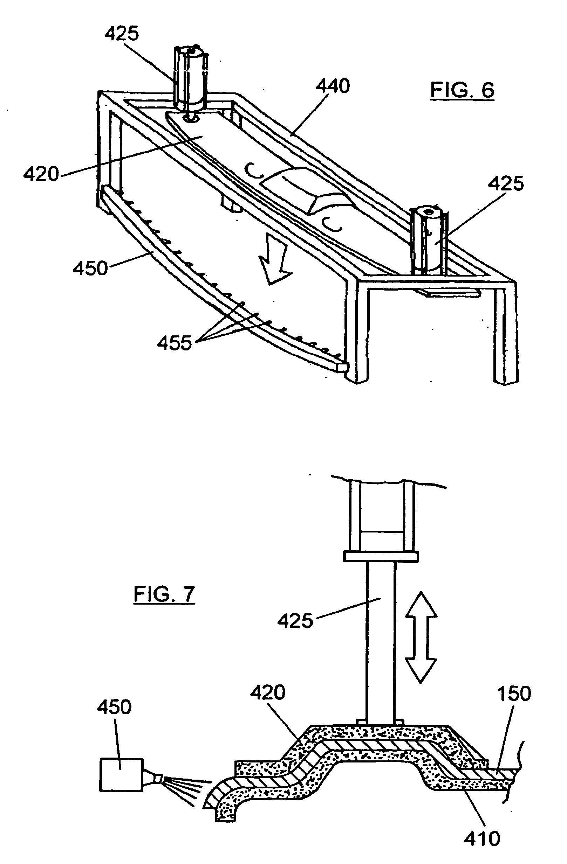

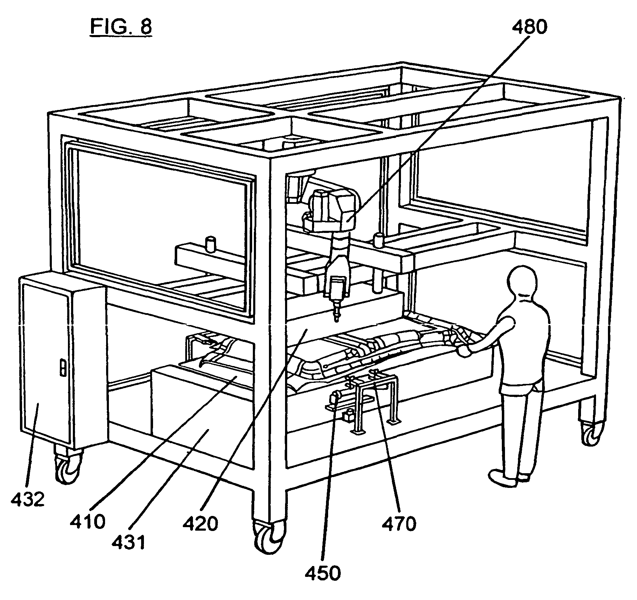

Figures 5-8 show an equipment which can be used for carrying out the ungluing or separation of the lining layer 200 from the substrate of a ceiling trim board for automobiles, according to a preferred embodiment of the invention. Figure 5 shows the base plate 440 without accessories for improving visibility of other parts; figure 6 shows the base plate with different accessories. The equipment comprises the following elements:
a cradle 410 which serves for supporting the trim board (substrate + lining) and for centering it in a suitable position for applying the steam; this cradle can be made of resin;
a counter-cradle 420 constituting a shield which allows the steam to be applied only in the areas in which the lining layer is to be unglued, without affecting the rest of the trim board; the counter-cradle is positioned by means of pneumatic cylinders 425 operated by a pneumatic system housed in a mechanism box 430 (figure 5) which, in addition to said pneumatic system, can also house a steam generator and the switchboard of the equipment (figure 5) (figure 8 shows a somewhat different embodiment in which the steam generator is housed in a specific compartment 431 and in which the switchboard is housed in an electric cupboard 432);
a steam sprayer 450 which support the steam nozzles 455 from which the steam flows out of towards the predetermined areas in which the lining is to be unglued from the substrate;
a control panel 460 for operating the equipment;
a mechanism for holding the lining layer, comprising several pneumatic grippers 470 which hold the unglued part of the lining layer (if the trim board is placed with the face downwards, gravity itself can be enough to separate the lining layer from the substrate and it is not necessary to hold it); and
a substrate trimming mechanism 480 intended for trimming the area of the substrate which is to be edged (this mechanism can comprise an ultrasound trimming robot).

The process can be carried out in the following manner:
- First, an assembly 150 is obtained (in a press, not shown in figures 5-8 and according to the method shown in figures 3A-3B) which comprises the substrate (constituted of the non-visible face lining, reinforcements, a foam or similar semi-rigid layer, an intermediate layer which allows the ungluing of the lining layer by means of steam, etc.) and the face lining layer. Obtaining the assembly includes the application of heat and pressure for shaping the assembly.
- The assembly is removed from the press and the assembly is placed in the steam application equipment (figures 5-8), between the cradle 410 and counter-cradle 420. The counter-cradle 420 is placed for separating the area in which the face lining is to be unglued from the substrate from the area in which the lining is not to be unglued, in order to shield the latter area from the steam.
- Then, steam is applied in the predetermined areas in which the lining is to be separated from the substrate, as shown in figure 7, which shows how the steam sprayer applies steam on the assembly 150 in the area not covered by the counter-cradle 420.
- Then, the lining is unglued (for example, together with the layer 190 facilitating the ungluing). This operation can be carried out by means of a system of pneumatic grippers 470 which catch the lining layer, unglue it and hold it. As an alternative, if the assembly 150 is placed in the equipment with the face downwards, after the application of the steam, it can be achieved that the lining layer 200 falls due to its own weight, due to the action of gravity, in which case it would not be necessary to use grippers for ungluing and holding the lining layer.
- Then, the substrate is trimmed, including the areas of the substrate which are to be edged; the trimming can be carried out with a robot.
- Then, adhesive is applied (using a gun for example) on the parts of the lining layer which have been unglued, to then continue to the edging, i.e. to the lining of the edges trimmed in the previous phase.

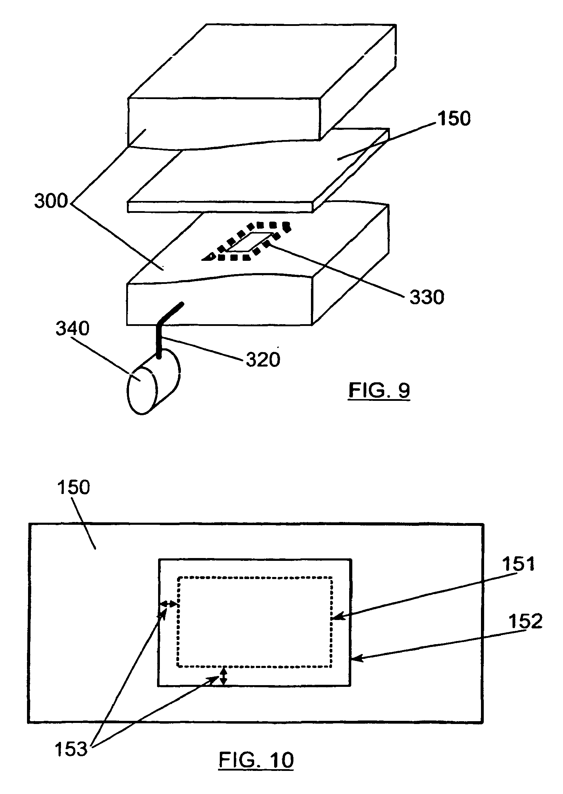

In an alternative embodiment of the invention schematically shown in figure 9, the application of steam is carried out in the substrate + lining assembly shaping press. According to this embodiment, the press or mold 300 can include machined channels 320 for the passage of the steam from a steam generator 340 towards steam outlets 330 located in the predetermined areas in which the lining is to be unglued from the substrate.

The process could be carried out in the following manner:
- First, all the layers of the substrate 100 (non-visible face lining, reinforcements, semi-rigid layer, intermediate layer facilitating the ungluing of the face lining layer) and the face lining layer are placed in the press 300 which constitutes a mold for shaping the assembly. (If, for example, it is a trim board for vehicles with a sun roof window, it is convenient to trim the corresponding area of the lining layer prior to placing it on the rest of the layers of the assembly, with the excess parts necessary for being able to edge in a subsequent operation. Another alternative, schematically shown in figure 10, is to carry out a first trimming in the mold once the assembly 150 constituted by the substrate and the lining is obtained. Said first trimming would make a through hole through the assembly 150, with first edges 151. Then, in a subsequent phase, once a part of the face lining is separated from the substrate 150, a second trimming is carried out, which only goes through the substrate and which forms second edges 152 corresponding to the perimeter of the sun roof window. The difference 153 in the dimensions between the two holes corresponds to the excess part of the lining, an excess part which will be used for covering the second edges 152).
- The mold is closed and heat and pressure are applied for shaping the assembly.
- Steam is applied after several seconds have elapsed since the closure of the mold. In a typical case, the trim board assembly may need 30 seconds for the shaping thereof inside of the mold. Then, 20 seconds can elapse from the time the mold is closed, and then the steam is applied in the corresponding areas for 10 seconds (during which shaping of the substrate + lining assembly is continued).
- The mold is opened and the assembly is removed in order to separate the lining layer from the substrate in the areas in which steam was applied.
- Then, the separated parts of the lining layer are held and the substrate is trimmed.
- Then, glue is applied in the areas of the lining which have been unglued.
- Finally, the edging of the lining is carried out, i.e. the lining is applied to the corresponding trimmed edges.

The materials, size, shape and arrangement of the elements will be susceptible to variation, as long as this does not imply any alteration of the basic concept of the invention.

Throughout the present description and claims, the word "comprises" and variants thereof, such as "comprising", do not intend to exclude other steps or components.

## Claims

1. A manufacturing process of a layered product comprising a substrate (100), constituted of at least one layer, and a lining (200) covering a visible surface of the substrate (100) and at least one edge (100a, 100b) of the substrate; the process comprising the following steps:
a) at least one layer intended for constituting a substrate (100) and at least one lining layer (200) intended for being the lining of the visible surface of the product are introduced in a press (300);
b) pressure and heat are applied on the layers in the press for the purpose of obtaining an assembly of layers bound together and having a predetermined shape defined by the press;
c) a fluid is applied on at least one predetermined area of the assembly of layers, for the purpose of ungluing at least the lining layer (200) from the substrate (100) in said at least one predetermined area;
d) a part of the lining layer (200) is separated from the substrate (100) in said at least one predetermined area;
e) the substrate is trimmed such that at least one part of the substrate is removed, such that at least one trimmed edge (100a, 100b) is obtained in said at least one predetermined area; and
f) said at least one trimmed edge (100a, 100b) is covered with the lining layer (200).

2. A process according to claim 1, **characterized in that** the fluid is steam.

3. A process according to any one of the preceding claims, **characterized in that** in step (a), the lining layer (200) is placed on an intermediate layer (180, 190) chosen so as to facilitate the separation of the part of the lining layer (200) from the substrate (100) in step (d).

4. A process according to claim 3, **characterized in that** said intermediate layer is a thermoplastic film.

5. A process according to claim 3 or 4, **characterized in that** said intermediate layer (180) forms part of the substrate (100) and is not separated from the substrate in step (d).

6. A process according to claim 3 or 4, **characterized in that** said intermediate layer (190) is separated from the substrate in step (d), together with the corresponding part of the lining layer (200).

7. A process according to any of the preceding claims, **characterized in that** the layered product is a part for an automobile.

8. A process according to claim 7, **characterized in that** the layered product is a trim board for the interior of an automobile.

9. A facility for carrying out the process according to any of the preceding claims, the facility comprising:
- means for receiving a plurality of layers, including layers intended for constituting a substrate (100) and a lining layer (200);
- means for subjecting said layers to pressure and heat such that an assembly of layers bound together is obtained with a predetermined shape;
**characterized in that** it also comprises:
- means for applying a fluid on at least one predetermined area of the assembly of layers, for the purpose of ungluing at least the lining layer (200) from the substrate (100) in said at least one predetermined area; and
- means for separating one part of the lining layer (200) from the substrate (100) in said at least one predetermined area.
- means for trimming the substrate such that a part of the obtained substrate is removed, such that at least one trimmed edge is obtained in said at least one predetermined area.

10. A facility according to claim 9, **characterized in that** the means for applying a fluid on at least one predetermined area of the assembly of layers comprise fluid conduits communicating a fluid source with said at least one predetermined area of the assembly of layers.

11. A facility according to claim 10, **characterized in that** the fluid source is a steam generator.

12. A facility according to claim 9, **characterized in that** the means for separating one part of the lining layer from the substrate consist of a shifting element.

13. A facility according to claim 12, **characterized in that** said shifting element comprises at least one gripper formed so as to lift said part of the lining layer.

14. A facility according to claim 9, **characterized in that** the means for trimming the substrate consist of an ultrasound apparatus.

15. A facility according to claim 9, **characterized in that** the means for subjecting the layers to pressure and heat are located in the same work station as the means for applying a fluid.

16. A facility according to claim 9, **characterized in that** the means for subjecting the layers to pressure and heat and the means for applying a fluid are located in different work stations within said facility.

## Patentansprüche

1. Ein Herstellungsverfahren für ein Schichtenprodukt, das ein Substrat (100) umfasst, bestehend aus mindestens einer Schicht, und eine Verkleidung (200), die eine sichtbare Oberfläche des Substrats (100) bedeckt und wenigstens eine Kante (100a, 100b) des Substrats; wobei das Verfahren die folgenden Schritte umfasst:
a) wenigstens eine Schicht, die für das Substrat (100) gedacht ist und wenigstens eine Verkleidungsschicht (200), dazu gedacht, die Verkleidung für die sichtbare Oberfläche des Produkts darzustellen, werden in eine Presse (300) gegeben;
b) auf die Schichten wird Druck und Hitze angewendet, um eine Anordnung von verbundenen Schichten zu erhalten, die eine festgelegte Form aufweisen, die durch die Presse festgelegt ist;
c) eine Flüssigkeit wird auf mindestens einen vorher festgelegten Bereich der Anordnung aufgetragen, mit dem Zweck mindestens eine Verkleidungsschicht (200) von dem Substrat (100) in dem besagten wenigstens einem vorher festgelegten Bereich zu lösen;
d) ein Teil der Verkleidungsschicht (200) wird von dem Substrat (100) in besagtem mindestens einen vorher festgelegten Bereich getrennt;
e) das Substrat wird so zurechtgeschnitten, dass wenigstens ein Teil des Substrats entfernt wird, so dass man mindestens eine abgeschnittene Kante (100a, 100b) in besagtem wenigstens einem vorher festgelegten Bereich erhält; und
f) besagte wenigstens eine zurechtgeschnittene Kante (100a, 100b) wird mit der Verkleidungsschicht (200) bedeckt.

2. Ein Verfahren gemäss Anspruch 1, **dadurch gekennzeichnet, dass** die Flüssigkeit Dampf ist.

3. Ein Verfahren gemäss einem der vorangegangenen Ansprüche, **dadurch gekennzeichnet, dass** bei Schritt (a) die Verkleidungsschicht (200) auf einer Zwischenschicht (180, 190) angebracht wird, die so gewählt ist, dass die Trennung des Teils der Verkleidungsschicht (200) von dem Substrat (100) im Schritt (d) erleichtert wird.

4. Ein Verfahren gemäss Anspruch 3, **dadurch gekennzeichnet, dass** die besagte Zwischenschicht eine thermoplastische Folie ist.

5. Ein Verfahren gemäss Anspruch 3 oder 4, **dadurch gekennzeichnet, dass** besagte Zwischenschicht (180) Teil des Substrats (100) ist und nicht von dem Substrat im Schritt (d) getrennt wird.

6. Ein Verfahren gemäss Anspruch 3 oder 4, **dadurch gekennzeichnet, dass** besagte Zwischenschicht (190) von dem Substrat im Schritt (d) getrennt wird, zusammen mit dem entsprechenden Teil der Verkleidungsschicht (200).

7. Ein Verfahren gemäss einem der vorangegangenen Ansprüche, **dadurch gekennzeichnet, dass** das Schichtenprodukt ein Teil für ein Automobil ist.

8. Ein Verfahren gemäss Anspruch 7, **dadurch gekennzeichnet, dass** das Schichtenprodukt eine Zierleiste für das Innere des Automobils ist.

9. Eine Vorrichtung zum Ausführen des Verfahrens gemäss einem der vorangegangenen Ansprüche, wobei diese Vorrichtung folgendes umfasst:
- Mittel zur Aufnahme einer Vielzahl an Schichten, eingeschlossen Schichten, die dafür gedacht sind, ein Substrat (100) und eine Verkleidungsschicht (200) zu bilden;
- Mittel, um die besagten Schichten Druck und Hitze auszusetzen, so dass man eine Anordnung von zusammenliegenden Schichten erhält mit einer vorbestimmten Form;
**dadurch gekennzeichnet, dass** sie ausserdem umfasst:
- Mittel zur Anbringung einer Flüssigkeit auf mindestens einen vorher festgelegten Bereich der Anordnung, mit dem Zweck mindestens eine Verkleidungsschicht (200) von dem Substrat (100) in dem besagten wenigstens einem vorher festgelegten Bereich zu lösen;
- Mittel zum Trennen eines Teils der Verkleidungsschicht (200) von dem Substrat (100) in besagtem mindestens einen vorher festgelegten Bereich;
- Mittel, um das Substrat so zurechtzuschneiden, dass wenigstens ein Teil des Substrats entfernt wird, so dass man mindestens eine abgeschnittene Kante in besagtem wenigstens einem vorher festgelegten Bereich erhält.

10. Eine Vorrichtung gemäss Anspruch 9, **dadurch gekennzeichnet, dass** das Mittel zum Auftragen einer Flüssigkeit auf wenigstens einen vorher bestimmten Bereich der Anordnung von Schichten Flüssigkeitskanäle umfasst, die eine Flüssigkeitsquelle mit besagtem wenigstens einem vorher festgelegten Bereich der Schichtenanordnung verbindet.

11. Eine Vorrichtung gemäss Anspruch 10, **dadurch gekennzeichnet, dass** die Flüssigkeitsquelle ein Dampferzeuger ist.

12. Eine Vorrichtung gemäss Anspruch 9, **dadurch gekennzeichnet, dass** das Mittel zum Trennen eines Teils der Verkleidungsschicht von dem Substrat aus einem Umschichtungselement besteht.

13. Eine Vorrichtung gemäss Anspruch 12, **dadurch gekennzeichnet, dass** besagtes Umschichtungselement mindestens einen Greifer umfasst, der so geformt ist, dass er besagten Teil der Verkleidungsschicht anheben kann.

14. Eine Vorrichtung gemäss Anspruch 9, **dadurch gekennzeichnet, dass** das Mittel zum Zurechtschneiden des Substrat aus einem Ultraschallgerät besteht.

15. Eine Vorrichtung gemäss Anspruch 9, **dadurch gekennzeichnet, dass** das Mittel, um die Schichten Druck und Hitze auszusetzen sich in der selben Arbeitsstation befinden wie das Mittel zum Aufbringen der Flüssigkeit.

16. Eine Vorrichtung gemäss Anspruch 9, **dadurch gekennzeichnet, dass** das Mittel, um die Schichten Druck und Hitze auszusetzen sich in einer anderen Arbeitsstation innerhalb der selben Vorrichtung befinden wie das Mittel zum Aufbringen der Flüssigkeit.

## Revendications

1. Un procédé de fabrication d'un produit stratifié comprenant un substrat (100), constitué par au moins une couche, et une garniture (200) couvrant une surface visible du substrat (100) et au moins un bord (100a, 100b) du substrat ; le procédé comprenant les étapes suivantes :
a) au moins une couche destinée à constituer un substrat (100) et au moins une couche de garniture (200) destinée à être la garniture de la surface visible du produit sont introduites dans une presse (300) ;
b) on applique de la pression et de la chaleur sur les couches se trouvant dans la presse afin d'obtenir un ensemble de couches unies ensemble et ayant une forme prédéterminée définie par la presse ;
c) on applique un fluide sur au moins une zone prédéterminée de l'ensemble de couches, afin de décoller au moins la couche de garniture (200) du substrat (100) dans au moins ladite zone prédéterminée ;
d) on sépare une partie de la couche de garniture (200) du substrat (100) dans au moins ladite zone prédéterminée ;
e) on rogne le substrat de manière à retirer au moins une partie du substrat, de manière à obtenir au moins un bord rogné (100a, 100b) dans au moins une zone prédéterminée ; et
f) on recouvre au moins un tel bord rogné (100a, 100b) avec la couche de garniture (200)

2. Un procédé selon la revendication 1, **caractérisé en ce que** le fluide est de la vapeur.

3. Un procédé selon l'une quelconque des revendications précédentes, **caractérisé en ce que** lors de l'étape (a), la couche de garniture (200) est mise en place sur une couche intermédiaire (180, 190) choisie de manière à faciliter la séparation de la partie de la couche de garniture (200) du substrat (100) lors de l'étape (d).

4. Un procédé selon la revendication 3, **caractérisé en ce que** ladite couche intermédiaire est un film thermoplastique.

5. Un procédé selon la revendication 3 ou 4, **caractérisé en ce que** ladite couche intermédiaire (180) fait partie du substrat (100) et elle ne se sépare pas du substrat lors de l'étape (d).

6. Un procédé selon la revendication 3 ou 4, **caractérisé en ce que** ladite couche intermédiaire (190) se sépare du substrat lors de l'étape (d), conjointement avec la partie correspondante de la couche de garniture (200).

7. Un procédé selon l'une quelconque des revendications précédentes, **caractérisée en ce que** le produit stratifié est une partie destinée à une automobile.

8. Un procédé selon la revendication 7, **caractérisé en ce que** le produit stratifié est une planche rognée pour l'intérieur d'une automobile.

9. Une installation pour mettre en oeuvre le procédé selon l'une quelconque des revendications précédentes, l'installation comprenant :
- des moyens pour recevoir une pluralité de couches, y compris les couches destinées à constituer un substrat (100) et une couche de revêtement (200) ;
- des moyens pour soumettre lesdites couches à de la pression et de la chaleur de manière à obtenir un ensemble de couches unies ensemble avec une forme prédéterminée ;
**caractérisée en ce qu'**elle comprend également:
- des moyens pour appliquer un fluide sur au moins une zone prédéterminée de l'ensemble de couches, afin de décoller au moins la couche de garniture (200) du substrat (100) dans au moins une zone prédéterminée ; et
- des moyens pour séparer une partie de la couche de revêtement (200) du substrat (100) dans au moins une telle zone prédéterminée ;
- des moyens pour rogner le substrat de manière à éliminer une partie du substrat obtenu, de manière à obtenir un bord rogné dans au moins une telle zone prédéterminée.

10. Une installation selon la revendication 9, **caractérisée en ce que** les moyens pour appliquer un fluide sur au moins une zone prédéterminée de l'ensemble de couches comprennent des conduits de fluide qui communiquent une source de fluide avec au moins une telle zone prédéterminée de l'ensemble de couches.

11. Une installation selon la revendication 10, **caractérisée en ce que** la source de fluide est un générateur de vapeur.

12. Une installation selon la revendication 9, **caractérisée en ce que** les moyens pour séparer une partie de la couche de garniture du substrat consistent en un élément de déplacement.

13. Une installation selon la revendication 12, **caractérisée en ce que** ledit élément de déplacement comprend au moins une poignée formée de manière à soulever ladite partie de la couche de garniture.

14. Une installation selon la revendication 9, **caractérisée en ce que** les moyens pour rogner le substrat consistent en un appareil ultrasonique.

15. Une installation selon la revendication 9, **caractérisée en ce que** les moyens pour soumettre les couches à de la pression et de la chaleur sont situés dans le même poste de travail que les moyens pour appliquer un fluide.

16. Une installation selon la revendication 9, **caractérisée en ce que** les moyens pour soumettre les couches à de la pression et à de la chaleur et les moyens pour appliquer un fluide sont situés dans des postes de travails différents de ladite installation.
